# EUROPÄISCHE PATENTSCHRIFT

(11) **EP 0 874 891 B1**
(45) Veröffentlichungstag und Bekanntmachung des Hinweises auf die Patenterteilung: **18.07.2001**
(21) Anmeldenummer: 96930976.4
(22) Anmeldetag: 29.08.1996
(51) Int. Cl.: C11D 3/37, C08G 69/10, C08G 73/06

(54) **VERWENDUNG VON MODIFIZIERTEN POLYASPARAGINSÄUREN IN WASCHMITTELN**
USE OF MODIFIED POLYASPARTIC ACIDS IN WASHING AGENTS
UTILISATION D'ACIDES POLYASPARTIQUES MODIFIES DANS DES AGENTS DE LAVAGE

(30) Priorität: 05.09.1995 DE 19532717
(43) Veröffentlichungstag der Anmeldung: 04.11.1998
(73) Patentinhaber: BASF AKTIENGESELLSCHAFT, 67056 Ludwigshafen (DE)
(72) Erfinder: BAUR, Richard, D-67112 Mutterstadt (DE); BERTLEFF, Werner, D-68519 Viernheim (DE); JÄGER, Hans-Ulrich, D-67434 Neustadt (DE); FUNHOFF, Angelika, D-68165 Mannheim (DE); KRONER, Matthias, D-67304 Eisenberg (DE); SCHORNICK, Gunnar, D-67271 Neuleiningen (DE)
(86) Internationale Anmeldenummer: EP9603797
(87) Internationale Veröffentlichungsnummer: WO9709409

(56) Entgegenhaltungen:
- EP-A- 0 454 126
- WO-A-94/01486
- WO-A-94/10282
- WO-A-94/14939
- WO-A-95/16020
- DE-A- 4 428 597
- DE-A- 4 428 638
- DE-A- 4 428 639

## Beschreibung

Die Erfindung betrifft die Verwendung von modifizierten Polyasparaginsäuren in Waschmitteln und Waschmittel, die die modifizierten Polyasparaginsäuren in Mengen von 0,1 bis 20 Gew.-% enthalten.

Aus der EP-A-0 454 126 sind Waschmittel bekannt, die 10 bis 40 Gew.-% eines Tensids, 5 bis 50 Gew.-% mindestens eines Natriumaluminiumsilicats, 0,5 bis 70 Gew.-% mindestens eines üblicherweise verwendeten Additivs und 5 bis 50 Gew.-% mindestens einer Polyaminosäure, vorzugsweise Polyasparaginsäure oder Polyglucaminsäure als organischen Cobuilder enthalten. Homopolymere der Asparaginsäure als Bestandteil von modernen Waschmittelformulierungen sind beispielsweise aus der WO-A-94/14939 und der WO-A-94/10282 bekannt. Polyasparaginsäure verbessert das Schmutzablösevermögen von granulatförmigen Waschmitteln.

Aus der WO-A-95/16020 ist bekannt, Polyasparaginsäure, die durch Polykondensation von Asparaginsäure in Gegenwart von Phosphorsäure in einem molaren Verhältnis von 1:0,05 bis 1:10 bei Temperaturen von mindestens 120°C zu Polysuccinimid und anschließende Hydrolyse des Polysuccinimids mit Basen zu mindestens teilweise neutralisierter Polyasparaginsäure hergestellt worden ist, als Zusatz zu Wasch- und Reinigungsmitteln in Mengen von 0,1 bis 10 Gew.-% zu verwenden. Die so hergestellten Polyasparaginsäuren haben gegenüber den nach anderen Verfahren herstellbaren Polyasparaginsäuren den Vorteil, daß sie eine wesentlich bessere biologische Abbaubarkeit besitzen.

Aus der WO-A-94/01486 sind modifizierte Polyasparaginsäuren bekannt, die durch Polykondensation von Asparaginsäure mit Fettsäuren, mehrbasischen Carbonsäuren, Anhydriden mehrbasischer Carbonsäuren, mehrbasischen Hydroxycarbonsäuren, einbasischen Polyhydroxycarbonsäuren, Alkoholen, Aminen, alkoxylierten Alkoholen und alkoxylierten Aminen, Aminozuckern, Kohlenhydraten, Zuckercarbonsäuren und/oder nichtproteinogenen Aminocarbonsäuren erhältlich sind. Die modifizierten Polyasparaginsäuren werden als Zusatz zu phosphatreduzierten und phosphatfreien Wasch- und Reinigungsmitteln, als Wasserbehandlungsmittel und als Belagsverhinderer bei der Eindampfung von Zuckersaft verwendet.

Die oben beschriebenen Polyasparaginsäuren verleihen den Waschmittelformulierungen zwar dispergierende Eigenschaften, jedoch erreichen sie nicht bei gleicher Einsatzmenge die gleiche inkrustationsinhibierende Wirkung von handelsüblichen polymeren Cobuildern wie beispielsweise Copolymerisaten aus Acrylsäure und Maleinsäure einer mittleren Molmasse von 70000 oder von Polymaleinsäuren mit einer Molmasse von 1000 bis 3000.

Der vorliegenden Erfindung liegt die Aufgabe zugrunde, einen gegenüber dem Stand der Technik verbesserten organischen Cobuilder auf Basis von Polyasparaginsäure zur Verfügung zu stellen.

Die Aufgabe wird erfindungsgemäß gelöst mit der Verwendung von modifizierten Polyasparaginsäuren, die durch Polykondensation von Asparaginsäure in Gegenwart von, jeweils bezogen auf die eingesetzte Asparaginsäure,
(a) 2,5 bis 25 Mol% Aminen mit mindestens 6 C-Atomen und
(b) mindestens 5 Gew.-% Phosphorsäure, phosphoriger Säure, unterphosphoriger Säure, Polyphosphorsäuren, Phosphorpentoxid, Phosphonsäuren oder Mischungen der genannten Säuren
bei Temperaturen von mindestens 120°C und anschließende Hydrolyse mit Basen zu modifizierten Polyasparaginsäuren mit einem Phosphorgehalt von 0,5 bis 10 Gew.-% erhältlich sind, als Zusatz zu Waschmitteln in einer Menge von 0,1 bis 20 Gew.-%, bezogen auf die Waschmittelformulierungen.

Gegenstand der Erfindung sind außerdem Waschmittel, die mindestens ein Tensid und einen organischen Cobuilder und gegebenenfalls sonstige übliche Bestandteile enthalten, wobei die Waschmittel als organischen Cobuilder 0,1 bis 20 Gew.-% einer modifierten Polyasparaginsäure enthalten, die durch Polykondensation von Asparaginsäure in Gegenwart von, jeweils bezogen auf die eingesetzte Asparaginsäure,
(a) 2,5 bis 25 Mol% Aminen mit mindestens 6 C-Atomen und
(b) mindestens 2 Gew.-% Phosphorsäure, phosphoriger Säure, unterphosphoriger Säure, Polyphosphorsäuren, Phosphorpentoxid, Phosphonsäuren oder Mischungen der genannten Säuren
bei Temperaturen von mindestens 120°C und anschließende Hydrolyse mit Basen zu modifizierten Polyasparaginsäuren mit einem Phosphorgehalt von 0,5 bis 10 Gew.-% erhältlich sind.

Die erfindungsgemäß als organischen Cobuilder in Waschmitteln einzusetzende modifizierten Polyasparaginsäuren können beispielsweise durch Polykondensation von D- oder DL-Asparaginsäure mit den oben unter (a) und (b) angegebenen Verbindungen hergestellt werden. Als Verbindungen der Komponente (a) kommen Amine mit mindestens 6 C-Atomen in Betracht. Bei diesen Aminen handelt es sich vorzugsweise um primäre und/oder sekundäre C₈- bis C₂₂-Alkylamine. Von den sekundären Alkylaminen sind solche Verbindungen bevorzugt, bei denen mindestens ein Alkylrest eine Alkylgruppe mit mindestens 6 C-Atomen besitzt, während der andere Alkylrest eine beliebige Anzahl von C-Atomen aufweisen kann, z.B. C₁- bis C₅-Alkylgruppen. Sofern tertiäre Amine eingesetzt werden, enthalten sie einen Alkylrest mit mindestens 6 C-Atomen, vorzugsweise mit mindestens 10 C-Atomen, während die beiden übrigen Alkylsubstituenten bevorzugt C₁- bis C₅-Alkylgruppen bedeuten.

Als Komponente (a) geeignete Amine sind beispielsweise 2-Ethylhexylamin, Hexylamin, Octylamin, Decylamin, Tridecylamin, Cetylamin, Stearylamin, Palmitylamin, Oleylamin, Talgfettamin, Kokosfettamin, hydriertes Talgfettamin, Anilin, Toluidin oder andere substituierte aromatische Amine und Polyisobutenamine, die beispielsweise 5 bis 30 Isobuteneinheiten aufweisen. Besonders bevorzugt eingesetzte Amine sind Dodecylamin, Tridecylamin, Octadecylamin, Stearylamin, Palmitylamin, Oleylamin, Talgfettamin oder Mischungen dieser Amine. Bezogen auf 1 Mol der bei der Polykondensation eingesetzten Asparaginsäure verwendet man 2,5 bis 25, vorzugsweise 2,5 bis 15 Mol% mindestens eines Amins.

Die Polykondensation der Asparaginsäure erfolgt in Gegenwart von Phosphorsäure, phosphoriger Säure, unterphosphoriger Säure, Polyphosphorsäuren, Phosphorpentoxid, Phosphonsäuren oder deren Mischungen. Als Phosphorsäure wird bevorzugt technische, 75 bis 85 %ige wäßrige ortho-Phosphorsäure eingesetzt. Man kann jedoch auch 100 %ige ortho-Phosphorsäure oder Metaphosphorsäure verwenden. Ebenso sind Polyphosphorsäuren einsetzbar, z.B. Diphosphorsäure (Pyrophosphorsäure), Triphosphorsäure und höhere Homologe der Phosphorsäure. Falls man bei der Kondensation überstöchiometrische Mengen an Phosphorsäure einsetzt, wird die Polykondensationsreaktion in Phosphorsäure als Löse- und Verdünnungsmittel durchgeführt. Als Verbindungen der Komponente (b) kommen außerdem Phosphorpentoxid und Phosphonsäuren in Betracht. Die Phosphonsäuren können beispielsweise mit Hilfe der Formel 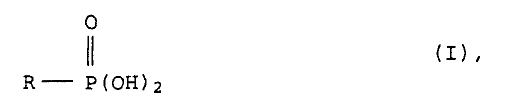 in der R = Phenyl, C₁- bis C₂₂-Alkyl bedeutet, charakterisiert werden. Die Verbindungen der Komponente (b) können entweder allein oder in Mischung bei der Herstellung der modifizierten Polyasparaginsäuren eingesetzt werden. Man verwendet sie bei der Cokondensation, bezogen auf die eingesetzte Asparaginsäure, mindestens in einer Menge von 2 Gew.-%. Das Gewichtsverhältnis von Asparaginsäure zu Phosphorsäure beträgt beispielsweise 1:0,05 bis 1:10, vorzugsweise 1 bis 0,4. Zur Herstellung der modifizierten Polyasparaginsäuren verwendet man vorzugsweise
(a) primäre und/oder sekundäre C₈- bis C₂₂-Alkylamine und
(b) Phosphorsäure, phosphorige Säure, Polyphosphorsäure oder deren Mischungen.

Besonders bevorzugt werden die erfindungsgemäß zu verwendenden modifizierten Polyasparaginsäuren durch Polykondensation von
(a) Dodecylamin, Tridecylamin, Stearylamin, Palmitylamin, Oleylamin, Talgfettamin, Kokosfettamin, hydriertes Talgfettamin oder Mischungen dieser Amine und
(b) Phosphorsäure und/oder phosphorige Säure
hergestellt. Die Kondensationstemperaturen betragen mindestens 120°C und liegen meistens in dem Bereich von 150 bis 250, vorzugsweise 160 bis 220°C. Bezogen auf die eingesetzte Asparaginsäure verwendet man 2,5 bis 25 Mol-% mindestens einer Verbindung der Komponente (a). Die Polykondensation kann beispielsweise so durchgeführt werden, daß man zu einer feinteiligen Asparaginsäure eine wäßrige Lösung der Komponenten (a) und (b) nacheinander oder gleichzeitig einwirken läßt. Die Reihenfolge der Zugabe der wäßrigen Lösungen der Komponenten (a) und (b) ist dabei beliebig. Die Komponenten (a) und (b) können mit der Asparaginsäure bei Raumtemperatur, z.B. bei 20°C oder auch bei höherer Temperatur, z.B. bei 150°C unter Kondensationsbedingungen in Kontakt gebracht werden. Falls die Komponenten (a) und (b) in Form einer wäßrigen Lösung mit der Asparaginsäure vermischt werden, wird zunächst Wasser aus dem Reaktionsgemisch abdestilliert. Danach erfolgt die Polykondensation. Man kann die Polycokondensation jedoch auch in Abwesenheit von Wasser vornehmen. Die Komponenten (a) und (b) können auch in Abwesenheit von Wasser mit Asparaginsäure vereinigt und kondensiert werden. Die Polycokondensation kann auch in der Weise durchgeführt werden, daß man zunächst die Komponenten (a) und (b) miteinander bei Raumtemperatur oder erhöhter Temperatur, z.B. Temperaturen von 20 bis 250°C, reagieren läßt und die so erhältlichen Umsetzungsprodukte mit Asparaginsäure cokondensiert. Die Struktur der Umsetzungsprodukte ist bisher noch nicht geklärt. Vermutlich handelt es sich um Salze und/oder um Reaktionsprodukte, die mit Hilfe der folgenden Formeln charakterisiert werden können:

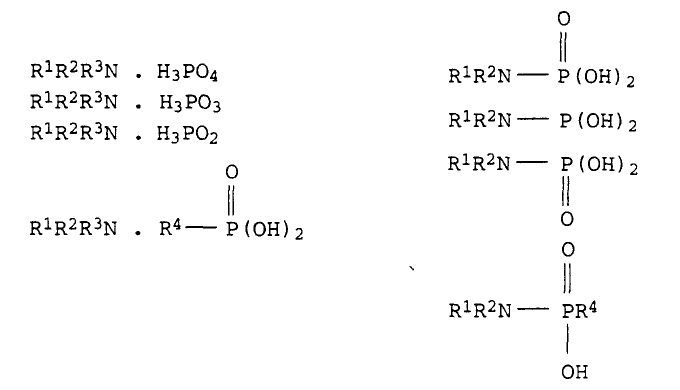

In den oben angegebenen Formeln steht mindestens ein Substituent
- R¹,R²,R³: für eine Alkylgruppe mit mindestens 6 C-Atomen, vorzugsweise für C₈- bis C₂₂-Alkyl, die anderen bedeuten dann H oder C₁- bis C₂₂-, vorzugsweise C₁- bis C₅-Alkyl,
- R⁴ =: Phenyl, C₁- bis C₂₂-Alkyl.

Die oben angegebenen Umsetzungsprodukte enthalten die Komponenten (a) und (b) im Molverhältnis 1:1. Man kann jedoch, bezogen auf die Verbindungen der Komponente (b) weniger als 1 Mol der Komponente (a) oder die äquivalente Menge an Verbindungen der Komponente (a) einsetzen, z.B. kann man pro Mol Phosphorsäure bis zu 3 Mol Amin und pro Mol phosphoriger Säure bis zu 2 Mol Amin anwenden.

Bei der Polykondensation der Asparaginsäure mit den Komponenten (a) und (b) erhält man zunächst Reaktionsprodukte, die Succinimid-Einheiten aufweisen. Die Reaktionsprodukte können durch Waschen mit Wasser von den Verbindungen der Komponente (b) befreit werden, z.B. von nicht einkondensierter Phosphorsäure. Die Succinimid-Einheiten enthaltenden Polymeren werden durch Hydrolyse mit Basen in Asparaginsäure-Einheiten enthaltende Polymeren überführt. Als Basen verwendet man vorzugsweise Natronlauge oder Kalilauge, kann jedoch hierfür auch Ammoniak oder Amine wie Ethanolamin, Diethanolamin oder Triethanolamin verwenden.

Nach dem Auswaschen der Phosphorsäure bzw. der anderen unter (b) genannten Säuren mit Wasser erhält man Reaktionsprodukte, die noch Phosphor gebunden enthalten. Der Gehalt der modifizierten Asparaginsäuren an Phosphor beträgt 0,5 bis 10, vorzugsweise 0,6 bis 6 Gew.-%. Für die erfindungsgemäße Verwendung besonders bevorzugt sind solche modifizierten Polyasparaginsäuren, deren Phosphorgehalt 0,6 bis 2 Gew.-% beträgt.

Die modifizierten Polyasparaginsäuren werden in einer Menge von 0,1 bis 20, vorzugsweise 1 bis 15 Gew.-% in Waschmittelformulierungen eingesetzt.

Die Waschmittel können pulverförmig sein oder auch in flüssiger Einstellung vorliegen. Die Zusammensetzung der Wasch- und Reinigungsmittel kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den U.S.A. und in Japan gebräuchlich sind, findet man beispielsweise in Chemical and Engn. News, Band 67, 35 (1989) tabellarisch dargestellt. Weitere Angaben über die Zusammensetzung von Wasch- und Reinigungsmitteln können Ullmanns Enzyklopädie der technischen Chemie, Verlag Chemie, Weinheim 1983, 4. Auflage, Seiten 63 bis 160, entnommen werden.

Unter phosphatreduzierten Waschmitteln sollen solche Formulierungen verstanden werden, die höchstens 25 Gew.-% Phosphat enthalten, berechnet als Pentanatriumtriphosphat. Bei den Waschmitteln kann es sich um Vollwaschmittel oder um Spezialwaschmittel handeln. Als Tenside kommen sowohl anionische als auch nichtionische oder Mischungen aus anionischen und nichtionischen Tensiden in Betracht. Der Tensidgehalt der Waschmittel beträgt vorzugsweise 8 bis 30 Gew.-%.

Geeignete anionische Tenside sind beispielsweise Fettalkoholsulfate von Fettalkoholen mit 8 bis 22, vorzugsweise 10 bis 18 Kohlenstoffatomen, z.B. C₉- bis C₁₁-Alkoholsulfate, C₁₂- bis C₁₃-Alkoholsulfate, Cetylsulfat, Myristylsulfat, Palmitylsulfat, Stearylsulfat und Talgfettalkoholsulfat.

Weitere geeignete anionische Tenside sind sulfatierte, ethoxylierte C₈- bis C₂₂-Alkohole bzw. deren lösliche Salze. Verbindungen dieser Art werden beispielsweise dadurch hergestellt, daß man zunächst einen C₈- bis C₂₂-, vorzugsweise einen C₁₀- bis C₁₈-Alkohol alkoxyliert und das Alkoxylierungsprodukt anschließend sulfatiert. Für die Alkoxylierung verwendet man vorzugsweise Ethylenoxid, wobei man pro Mol Fettalkohol 2 bis 50, vorzugsweise 3 bis 20 Mol, Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierte C₈- bis C₂₂-Alkohole, die Ethylenoxid und Propylenoxid oder Ethylenoxid und Butylenoxid enthalten. Die alkoxylierten C₈- bis C₂₂-Alkohole können die Ethylenoxid-, Propylenoxid- und Butylenoxideinheiten in Form von Blocken oder in statistischer Verteilung enthalten.

Weitere geeignete anionische Tenside sind Alkylsulfonate wie C₈- bis C₂₄-, vorzugsweise C₁₀-C₁₈-Alkansulfonate sowie Seifen wie beispielsweise die Salze von C₈- bis C₂₄-Carbonsäuren.

Weitere geeignete anionische Tenside sind C-₉- bis C₂₀-linear-Alkylbenzolsulfonate (LAS). Vorzugsweise werden die erfindungsgemäßen Polymeren in LAS-armen Waschmittelformulierungen mit weniger als 4 %, besonders bevorzugt in LAS-freien Formulierungen eingesetzt.

Die anionischen Tenside werden dem Waschmittel vorzugsweise in Form von Salzen zugegeben. Geeignete Kationen in diesen Salzen sind Alkalimetallionen wie Natrium-, Kalium-, Lithium- und Ammoniumionen wie z.B. Hydroxyethylammonium-, Di(hydroxyethyl)ammonium- und Tri(hydroxyethyl)ammoniumionen.

Als nichtionische Tenside eignen sich beispielsweise alkoxylierte C₈- bis C₂₂-Alkohole. Die Alkoxylierung kann mit Ethylenoxid, Propylenoxid und/oder Butylenoxid durchgeführt werden. Als Tensid einsetzbar sind hierbei sämtliche alkoxylierten Alkohole, die mindestens zwei Moleküle eines vorstehend genannten Alkylenoxids addiert enthalten. Auch hierbei kommen Blockpolymerisate von Ethylenoxid, Propylenoxid und/oder Butylenoxid in Betracht oder Anlagerungsprodukte, die die genannten Alkylenoxide in statistischer Verteilung enthalten. Pro Mol Alkohol verwendet man 2 bis 5, vorzugsweise 3 bis 20 Mol mindestens eines Alkylenoxids. Vorzugsweise setzt man als Alkylenoxid Ethylenoxid ein. Die Alkohole haben vorzugsweise 10 bis 18 Kohlenstoffatomen.

Eine andere Klasse nichtionischer Tenside sind Alkylpolyglucoside mit 8 bis 22, vorzugsweise 10 bis 18 Kohlenstoffatomen in der Alkylkette. Diese Verbindungen enthalten 1 bis 20, vorzugsweise 1,1 bis 5 Glucosideinheiten.

Eine andere Klasse nichtionischer Tenside sind N-Alkylglucamide der allgemeinen Struktur III bzw. IV 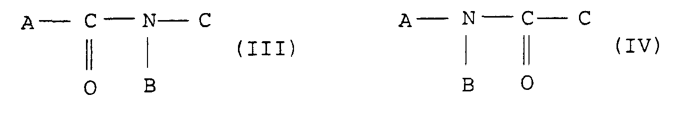 wobei A ein C₆- bis C₂₂-Alkyl, B ein H oder C₁- bis C₄-Alkyl und C ein Polyhydroxyalkyl-Rest mit 5 bis 12 C-Atomen und mindestens 3 Hydroxygruppen ist. Vorzugsweise steht A für C₁₀- bis C₁₈-Alkyl-, B für CH₃- und C für einen C₅ oder C₆-Rest. Beispielsweise erhält man derartige Verbindungen durch die Acylierung von reduzierend aminierten Zuckern mit Säurechloriden von C₁₀-C₁₈-Carbonsäuren. Die Waschmittelformulierungen enthalten vor zugsweise mit 3-12 Mol Ethylenoxid ethoxylierte C₁₀-C₁₆-Alkohole, besonders bevorzugt ethoxylierte Fettalkohole als nichtionische Tenside.

Weitere, bevorzugt in Betracht kommende Tenside sind die aus der WO-A-95/11225 bekannten endgruppenverschlossenen Fettsäureamidalkoxylate der allgemeinen Formel

R¹-CO-NH-(CH₂)ₙ-O-(AO)ₓ-R²

in der
- R¹: einen C₅- bis C₂₁-Alkyl- oder -Alkenylrest bezeichnet,
- R²: eine C₁- bis C₄-Alkylgruppe bedeutet,
- A: für C₂- bis C₄-Alkylen steht,
- n: die Zahl 2 oder 3 bezeichnet und
- x: einen Wert von 1 bis 6 hat.

Beispiele für solche Verbindungen sind die Umsetzungsprodukte von n-Butyltriglykolamin der Formel H₂N-(CH₂-CH₂-O)₃-C₄H₉ mit Dodecansäuremethylester oder die Reaktionsprodukte von Ethyltetraglykolamin der Formel H₂N-(CH₂-CH₂-O)₄-C₂H₅ mit einem handelsüblichen Gemisch von gesättigten C₈- bis C₁₈-Fettsäuremethylestern.

Die pulver- oder granulatförmigen Waschmittel sowie gegebenenfalls auch strukturierte Flüssigwaschmittel enthalten außerdem einen oder mehrere anorganische Builder. Als anorganische Buildersubstanzen eignen sich alle üblichen anorganischen Builder wie Alumosilikate, Silikate, Carbonate und Phosphate.

Geeignete anorganische Builder sind z.B. Alumosilikate mit ionenaustauschenden Eigenschaften wie z.B. Zeolithe. Verschiedene Typen von Zeolithen sind geeignet, insbesondere Zeolithe A, X, B, P, MAP und HS in ihrer Na-Form oder in Formen, in denen Na teilweise gegen andere Kationen wie Li, K, Ca, Mg oder Ammonium ausgetauscht sind. Geeignete Zeolithe sind beispielsweise beschrieben in EP-A-0 038 591, EP-A-0 021 491, EP-A-0 087 035, US-A-4 604 224, GB-A-2 013 259, EP-A-0 522 726, EP-A-0 384 070A und WO-A-94/24251.

Weitere geeignete anorganische Builder sind z.B. amorphe oder kristalline Silikate wie z.B. amorphe Disilikate, kristalline Disilikate wie das Schichtsilikat SKS-6 (Hersteller Hoechst AG). Die Silikate können in Form ihrer Alkali-, Erdalkali- oder Ammoniumsalze eingesetzt werden. Vorzugsweise werden Na-, Li- und Mg-Silikate eingesetzt.

Weitere geeignete anorganische Buildersubstanzen sind Carbonate und Hydrogencarbonate. Diese können in Form ihrer Alkali-, Erdalkali- oder Ammoniumsalze eingesetzt werden. Vorzugsweise werden Na-, Li- und Mg-Carbonate bzw. Hydrogencarbonate, insbesondere Natriumcarbonat und/oder Natriumhydrogencarbonat eingesetzt.

Die anorganischen Builder können in den Waschmitteln in Mengen von 0 bis 60 Gew.-% zusammen mit gegebenenfalls zu verwendenden organischen Cobuildern enthalten sein. Die anorganischen Builder können entweder allein oder in beliebigen Kombinationen miteinander in das Waschmittel eingearbeitet werden. In pulver- oder granulatförmigen Waschmitteln werden sie in Mengen von 10 bis 60 Gew.-%, vorzugsweise in Mengen von 20 bis 50 Gew.-% zugesetzt. In strukturierten (mehrphasigen) Flüssigwaschmitteln werden anorganische Builder in Mengen bis zu 40 Gew.-%, vorzugsweise bis zu 20 Gew.-% zugesetzt. Sie werden in den flüssigen Formulierungsbestandteilen suspendiert.

In pulver- oder granulatförmigen sowie in flüssigen Waschmittelformulierungen sind organische Cobuilder in Mengen von 0,1 bis 20 Gew.-%, vorzugsweise in Mengen von 1 bis 15 Gew.-% zusammen mit anorganischen Buildern enthalten. Die pulver- oder granulatförmigen Vollwaschmittel können außerdem als sonstige übliche Bestandteile ein Bleichsystem bestehend aus mindestens einem Bleichmittel, gegebenenfalls in Kombination mit einem Bleichaktivator und/oder einem Bleichkatalysator enthalten.

Geeignete Bleichmittel sind Perborate und Percarbonate in Form ihrer Alkali- insbesondere ihrer Na-Salze. Sie sind in Mengen von 5 bis 30 Gew.-%, vorzugsweise 10 bis 25 Gew.-% in den Formulierungen enthalten. Weitere geeignete Bleichmittel sind anorganische und organische Persäuren in Form ihrer Alkali- oder Magnesiumsalze oder teilweise auch in Form der freien Säuren. Beispiele für geeignete organische Percarbonsäuren bzw. -Salze sind z.B. Mg-Monoperphthalat, Phthalimidopercapronsäure und Dodecan-1,10-dipersäure. Beispiel für ein anorganisches Persäuresalz ist Kaliumperoxomonosulfat (Oxon®).

Geeignete Bleichaktivatoren sind z.B.
- Acylamine wie Tetraacetylethylendiamin, Tetraacetylglycoluril, N,N'-Diacetyl-N,N'-dimethylharnstoff und 1,5-Diacetyl-2,4-dioxohexahydro-1,3,5-triazin
- acylierte Lactame wie beispielsweise Acetylcaprolactam, Octanoylcaprolactam und Benzoylcaprolactam
- substituierte Phenolester von Carbonsäuren wie z.B. Na-acetoxybenzolsulfonat, Na-octanoyloxybenzolsulfonat und Na-nonanoyloxybenzolsulfonat
- acylierte Zucker wie z.B. Pentaacetylglucose
- Anthranilderivate wie z.B. 2-Methylanthranil oder 2-Phenylanthranil
- Enolester wie z.B. Isopropenylacetat
- Oximester wie z.B. O-Acetylacetonoxim
- Carbonsäureanhydride, wie z.B. Phthalsäureanhydrid oder Essigsäureanhydrid.

Vorzugsweise werden Tetraacetylethylendiamin und Na-nonanoyloxybenzolsulfonate als Bleichaktivatoren eingesetzt. Die Bleichaktivatoren werden Vollwaschmitteln in Mengen von 0,1 bis 15 Gew.-%, vorzugsweise in Mengen von 1,0 bis 8,0 Gew.-%, besonders bevorzugt in Mengen von 1,5 bis 6,0 Gew.-% zugesetzt.

Geeignete Bleichkatalysatoren sind quaternisierte Imine und Sulfonimine wie sie in US-A-5 360 568, US-A-5 360 569 und EP-A-0 453 003 beschrieben sind und Mn-Komplexe, vgl. z.B. WO-A-94/21777. Falls Bleichkatalysatoren in den Waschmittelformulierungen eingesetzt werden, sind sie darin in Mengen bis zu 1,5 Gew.-%, vorzugsweise bis zu 0,5 Gew.-%, im Falle der sehr aktiven Mangankomplexe in Mengen bis zu 0,1 Gew.% enthalten.

Die Waschmittel enthalten vorzugsweise ein Enzymsystem. Dabei handelt es sich um üblicherweise in Waschmitteln eingesetzte Proteasen, Lipasen, Amylasen sowie Cellulasen. Das Enzymsystem kann auf ein einzelnes der Enzyme beschränkt sein oder eine Kombination verschiedener Enzyme beinhalten. Von den handelsüblichen Enzymen werden den Waschmitteln in der Regel Mengen von 0,1 bis 1,5 Gew.-%, vorzugsweise 0,2 bis 1,0 Gew.-% des konfektionierten Enzyms zugesetzt. Geeignete Proteasen sind z.B. Savinase® und Esperase® (Hersteller Novo Nordisk). Eine geeignete Lipase ist z.B. Lipolase® (Hersteller Novo Nordisk). Eine geeignete Cellulase ist z.B. Celluzym® (Hersteller Novo Nordisk).

Die Waschmittel enthalten als sonstige übliche Bestandteile vorzugsweise Soil release Polymere und/oder Vergrauungsinhibitoren. Dabei handelt es sich z.B. um
- Polyester aus Polyethylenoxiden mit Ethylenglykol und/oder Propylenglykol und aromatischen Dicarbonsäuren oder aromatischen und aliphatischen Dicarbonsäuren. Polyester aus einseitig endgruppenverschlossenen Polyethylenoxiden mit zwei- und/oder mehrwertigen Alkoholen und Dicarbonsäuren. Derartige Polyester sind bekannt, vgl. beispielsweise US-A-3 557 039, GB-A-1 154 730, EP-A-0 185 427, EP-A-0 241 984, EP-A-0 241 985, EP-A-0 272 033 und US-A-5 142 020.

Weitere geeignete Soil release Polymere sind amphiphile Pfropf-Copolymere von Vinyl- und/oder Acrylester auf Polyalkylenoxiden, vgl. US-A-4 746 456, US-A-4 846 995, DE-A-3 711 299, US-A-4 904 408, US-A-4 846 994 und US-A-4 849 126 oder modifizierte Cellulosen wie z.B. Methylcellulose, Hydroxypropylcellulose oder Carboxymethylcellulose.

Vergrauungsinhibitoren und Soil release Polymere sind in den Waschmittelformulierungen zu 0 bis 2,5 Gew.-%, vorzugsweise zu 0,2 bis 1,5 Gew.-%, besonders bevorzugt zu 0,3 bis 1,2 Gew.-% enthalten. Bevorzugt eingesetzte Soil release Polymere sind die aus der US-A-4 746 456 bekannten Pfropfpolymeren von Vinylacetat auf Polyethylenoxid der Molmasse 2500 - 8000 im Gewichtsverhältnis 1,2:1 bis 3,0:1, sowie handelsübliche Polyethylenterephthalat/polyoxyethylenterephthalate der Molmasse 3000 bis 25000 aus Polyethylenoxiden der Molmasse 750 bis 5000 mit Terephthalsäure und Ethylenoxid und einem Molverhältnis von Polyethylenterephthalat zu Polyoxyethylenterephthalat von 8:1 bis 1:1 und die aus der DE-A-4 403 866 bekannten Blockpolykondensate, die Blöcke aus (a) Ester-Einheiten aus Polyalkylenglykolen einer Molmasse von 500 bis 7500 und aliphatischen Dicarbonsäuren und/oder Monohydroxymonocarbonsäuren und (b) Ester-Einheiten aus aromatischen Dicarbonsäuren und mehrwertigen Alkoholen enthalten. Diese amphiphilen Blockcopolymerisate haben Molmassen von 1500 bis 25000.

Ein typisches pulver- oder granulatförmiges Vollwaschmittel kann beispielsweise folgende Zusammensetzung aufweisen:
- 3 bis 50, vorzugsweise 8 bis 30 Gew.-% mindestens eines anionischen und/oder nichtionischen Tensids,
- 5 bis 50, vorzugsweise 15 bis 42,5 Gew.-% mindestens eines anorganischen Builders,
- 5 bis 30, vorzugsweise 10 bis 25 Gew.-% eines anorganischen Bleichmittels,
- 0,1 bis 15, vorzugsweise 1 bis 8 Gew.-% eines Bleichaktivators,
- 0 bis 1, vorzugsweise bis höchstens 0,5 Gew.-% eines Bleichkatalysators,
- 0,05 bis 5 Gew.-%, vorzugsweise 0,2 bis 2,5 Gew.-% eines Farbübertragungsinhibitors auf Basis von wasserlöslichen Homopolymerisaten von N-Vinylpyrrolidon oder N-Vinylimidazol, wasserlöslichen Copolymerisaten aus N-Vinylimidazol und N-Vinylpyrrolidon, vernetzten Copolymerisaten aus N-Vinylimidazol und N-Vinylpyrrolidon mit einer Teilchengröße von 0,1 bis 500, vorzugsweise bis zu 250 µm, wobei diese Copolymerisate 0,01 bis 5, vorzugsweise 0,1 bis 2 Gew.-% N,N'-Divinylethylenharnstoff als Vernetzer enthalten. Weitere Farbübertragungsinhibitoren sind wasserlösliche und auch vernetzte Polymerisate von 4-Vinylpyridin-N-oxid, die durch Polymerisieren von 4-Vinylpyridin und anschließende Oxidation der Polymeren erhältlich sind.
- 0,1 bis 20, vorzugsweise 1 bis 15 Gew.-% mindestens einer erfindungsgemäß zu verwendenden modifizierten Polyasparaginsäure als organischer Cobuilder,
- 0,2 bis 1,0 Gew.-% Protease,
- 0,2 bis 1,0 Gew.-% Lipase,
- 0,3 bis 1,5 Gew.-% eines Soil release Polymers.

In farbschonenden Spezialwaschmitteln (beispielsweise in sogenannten Colorwaschmitteln) wird oft auf ein Bleichsystem vollständig oder teilweise verzichtet. Ein typisches pulver- oder granulatförmiges Colorwaschmittel kann beispielsweise folgende Zusammensetzung aufweisen:
- 3 bis 50, vorzugsweise 8 bis 30 Gew.-% mindestens eines anionischen und/oder nichtionischen Tensids,
- 10 bis 60, vorzugsweise 20 bis 55 Gew.-% mindestens eines anorganischen Builders,
- 0 bis 15, vorzugsweise 0 bis 5 Gew.-% eines anorganischen Bleichmittels,
- 0,05 bis 5 Gew.-%, vorzugsweise 0,2 bis 2,5 Gew.-% eines Farbübertragungsinhibitors, vgl. oben,
- 0,1 bis 20, vorzugsweise 1 bis 15 Gew.-% mindestens einer oben beschriebenen modifizierten Polyasparaginsäure als organischen Cobuilder,
- 0,2 bis 1,0 Gew.-% Protease,
- 0,2 bis 1,0 Gew.-% Cellulase,
- 0,2 bis 1,5 Gew.-% eines Soil release Polymers, z.B. einem Pfropfpolymerisats von Vinylacetat auf Polyethylenglykol.

Die pulver- oder granulatförmigen Waschmittel können als sonstige übliche Bestandteile bis zu 60 Gew.-% an anorganischen Stellmitteln enthalten. Üblicherweise wird hierfür Natriumsulfat verwendet. Vorzugsweise sind die erfindungsgemäßen Waschmittel aber arm an Stellmitteln und enthalten bis zu 20 Gew.-%, besonders bevorzugt bis zu 8 Gew.-% an Stellmitteln.

Die erfindungsgemäßen Waschmittel können unterschiedliche Schüttdichten im Bereich von 300 bis 950 g/l besitzen. Moderne Kompaktwaschmittel besitzen in der Regel hohe Schüttdichten,z.B. 550 bis 950 g/l, und zeigen einen Granulataufbau.

Die erfindungsgemäßen flüssigen Waschmittel enthalten beispielsweise
- 5 bis 60, vorzugsweise 10 bis 40 Gew.-% mindestens eines anionischen und/oder nichtionischen Tensids,
- 0,05 bis 5 Gew.-%, vorzugsweise 0,2 bis 2,5 Gew.-% eines Farbübertragungsinhibitors (vgl. oben),
- 0,1 bis 20, vorzugsweise 1 bis 15 Gew.-% mindestens einer oben beschriebenen modifizierten Polyasparaginsäure als Cobuilder,
- 0 bis 1,0 Gew.-% Protease,
- 0 bis 1,0 Gew.-% Cellulase,
- 0 bis 1,5 Gew.-% eines Soil release Polymers und/oder Vergrauungsinhibitors,
- 0 bis 60 Gew.-% Wasser,
- 0 bis 10 Gew.-% Alkohole, Glykole wie Ethylenglykol, Diethylenglykol oder Propylenglykol oder Glycerin.

Die Waschmittel können gegebenenfalls weitere übliche Zusätze enthalten. Als weitere Zusätze können gegebenenfalls z.B. Komplexbildner, Phosphonate, optische Aufheller, Farbstoffe, Parfümöle, Schaumdämpfer und Korrosionsinhibitoren enthalten sein.

Die Prozentangaben in den Beispielen bedeuten Gew.-%, sofern nichts anderes daraus hervorgeht.

### Beispiele

### Herstellung der Cobuilder 1 bis 3

In einem 2 l fassenden Reaktor, der mit einem Rührer und einer Destillationsbrücke versehen ist, wird eine Mischung aus 133 g L-Asparaginsäure, 326 g 75 %iger Phosphorsäure und den in Tabelle 1 angegebenen Mengen an Amin vorgelegt und unter Rühren auf eine Temperatur von 100°C erwärmt. Das Reaktionsgemisch wird im Vakuum der Wasserstrahlpumpe bei einer Temperatur von 100°C entwässert. Die Temperatur des Reaktionsgemisches wird danach auf 180°C erhöht und das Reaktionsgemischt 3 Stunden bei dieser Temperatur der Polykondensation unterworfen. Danach kühlt man den Reaktorinhalt ab, nimmt das Polykondensat in 1 l Wasser auf, filtriert und wäscht den unlöslichen Rückstand mit 1 l Wasser nach. Das mit Wasser gewaschene Polykondensat wird in 500 ml Wasser aufgeschlämmt, auf 60°C erwärmt und durch Zugabe von 25 %iger wäßriger Natronlauge so schnell hydrolysiert, daß der pH-Wert der Reaktionslösung immer zwischen 8 und 10 liegt. Die Hydrolyse ist beendet, wenn keine unlöslichen Anteile mehr vorhanden sind. Es resultieren klare bis trübe wäßrige Lösungen von Polycokondensaten. Eine Probe der wäßrigen Lösung des Polykondensats wird getrocknet und auf Phosphorgehalt analysiert. Die Tabelle 1 enthält Angaben über die Eigenschaften der erhaltenen Reaktionsprodukte.

### Herstellung vom Cobuilder 4

In dem oben beschriebenen Reaktor werden 150 g Wasser und 20,4 g Schwefelsäure vorgelegt, zuerst mit 39,8 g Tridecylamin und dann mit 133 g Asparaginsäure versetzt. Das Reaktionsgemisch wird unter Rühren auf 100°C erhitzt und Wasser im Wasserstrahlvakuum abdestilliert. Die Polykondensation erfolgt durch 5stündiges Erhitzen der Mischung auf 180°C. Nach dem Abkühlen wird der Reaktorinhalt in 70 g Wasser aufgeschlämmt. Zu dieser Aufschlämmung dosiert man innerhalb von 15 Minuten 130 g 25 %ige wäßrige Natronlauge. Der pH-Wert der Lösung beträgt 7.

**Tabelle 1**

| Cobuilder | Amin [g] | Säure | Feststoffgehalt der Lösung [%] | P-Gehalt des Cokondensats [%] | Molmasse des Cokondensats |
|---|---|---|---|---|---|
| 1 | 20,0 Tridecylamin | H₃PO₄ | 40,9 | 1,4 | 15000 |
| 2 | 13,4 Oleylamin | H₃PO₄ | 25,2 | 1,1 | 20000 |
| 3 | 14,6 Butylamin | H₃PO₄ | 38,1 | 0,2 | 20000 |
| 4 | 39,8 Tridecylamin | H₂SO₄ (20,4 g) | 43,4 | - | 4000 |

Unter Verwendung von Cobuilder 1 wurden die in Tabelle 2 beschriebenen Waschmittelformulierungen hergestellt. Die Zusammensetzungen A-M sind Kompaktwaschmittel, N und O sind Beispiele für Colorwaschmittel und die Formulierung P ist ein strukturiertes Flüssigwaschmittel. Die Abkürzungen in Tabelle 2 haben folgende Bedeutung:
- TAED:: Tetraacetylethylendiamin
- Soil release Additiv 1:: Polyethylenterephthalat/Polyoxyethylenterephthalat im Molverhältnis 3:2, Molmasse des einkondensierten Polyethylenglykols 4000, Molmasse des Polyesters 10000
- Soil release Additiv 2:: Pfropfpolymerisat von Vinylacetat auf Polyethylenglykol der Molmasse 8000, Molmasse des Pfropfpolymerisats 24000
- EO:: Ethylenoxid

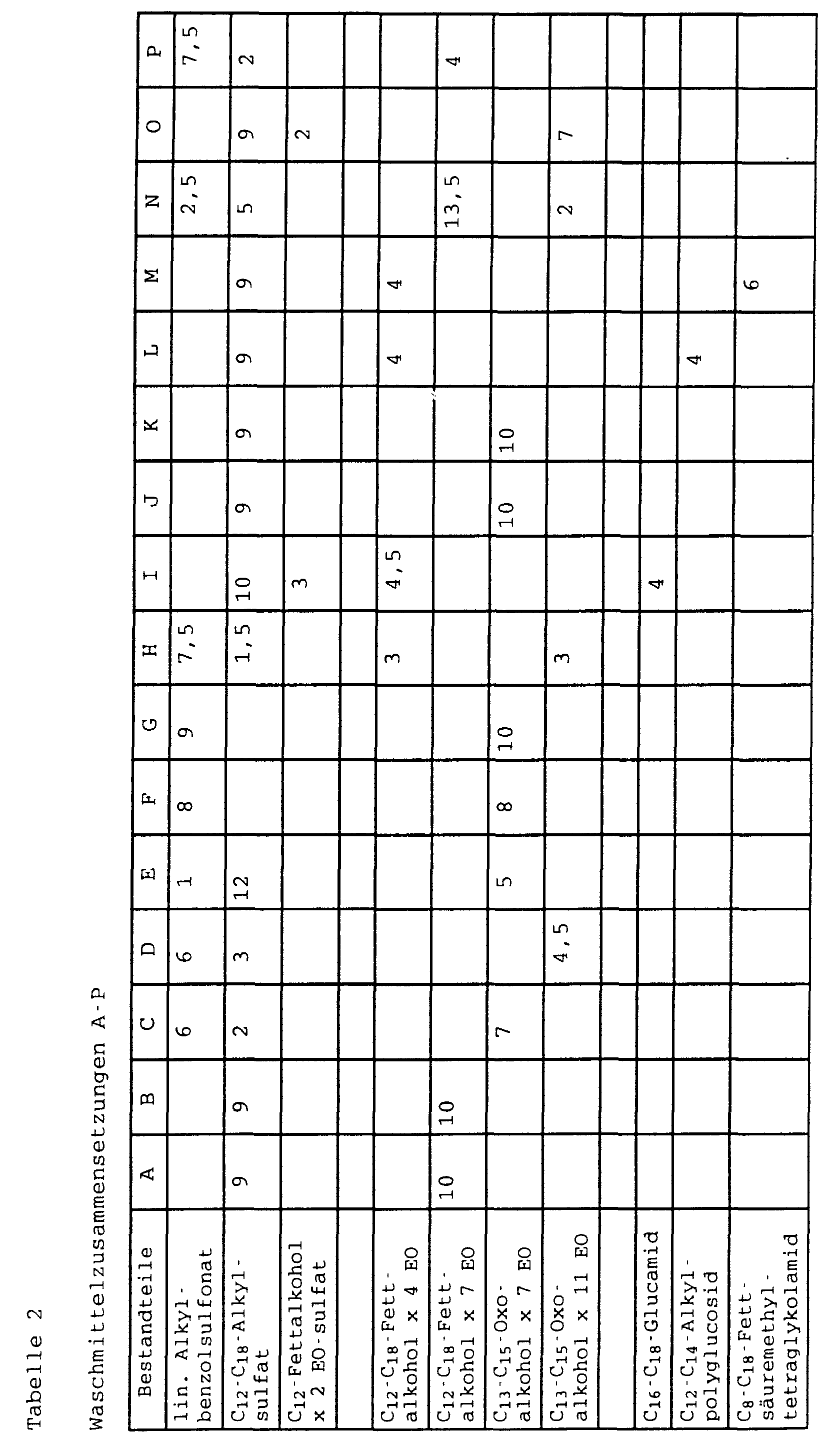

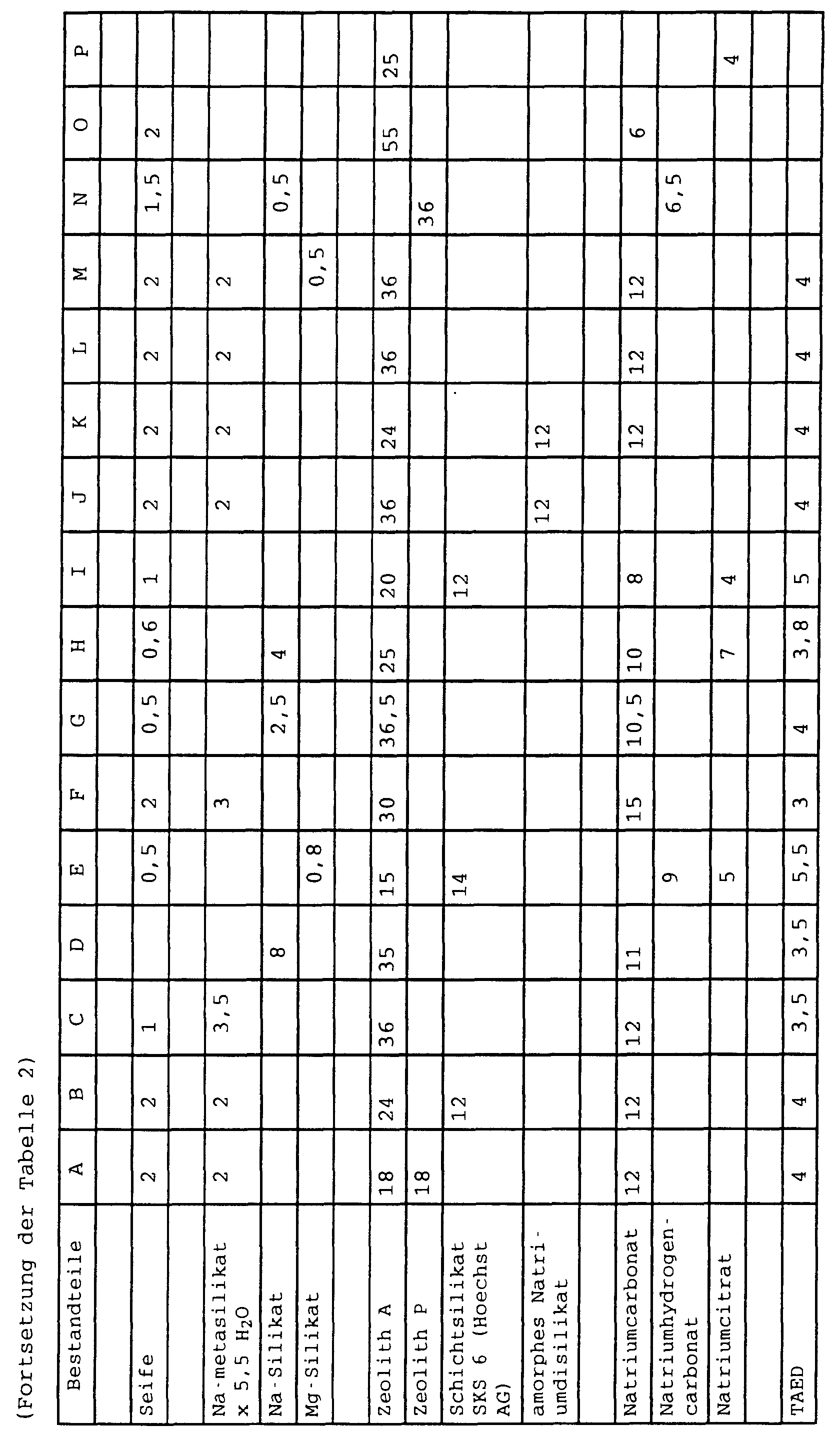

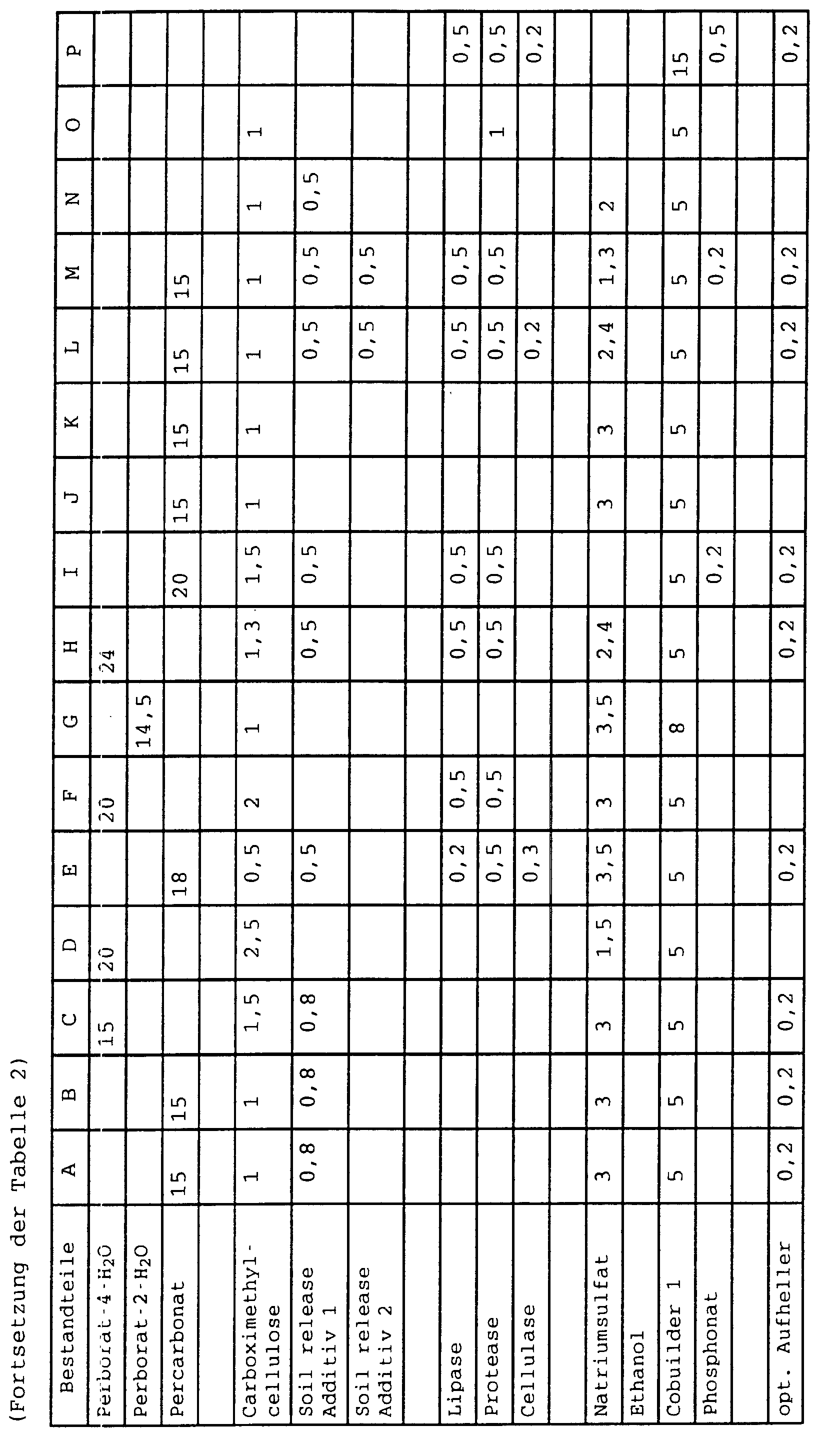

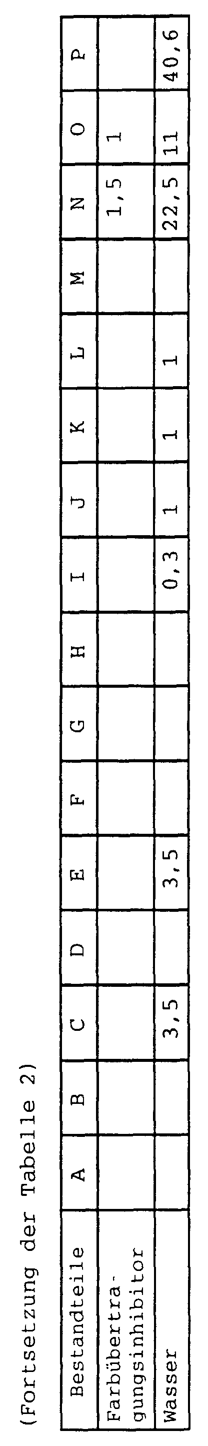

Die in Tabelle 1 beschriebenen Cobuilder 1 und 2 sind gemäß Erfindung zu verwendende modifizierte Polyasparaginsäuren, während die Cobuilder 3 und 4 außerhalb der Erfindung liegen.

Um einen weiteren Vergleich mit dem Stand der Technik zu erhalten, wurden die Polyasparaginsäuren A, B und C in bekannter Weise hergestellt und als Cobuilder in den Waschmittelformulierungen C, D und F gemäß Tabelle 2 getestet.

### Herstellung von Polyasparaginsäure A

Gemäß Beispiel 5 der WO-A-95/16020 kondensierte man Asparaginsäure in Gegenwart von Phosphorsäure im Molverhältnis 2:5 bei 160°C innerhalb von 6 Stunden. Die Polyasparaginsäure hatte einen Restphosphorgehalt von 0,9 % und eine Molmasse von 30000.

### Polyasparaginsäure B

Herstellung durch Kondensation von Maleinsäureanhydrid mit Ammoniak nach dem Verfahren der DE-A-4 300 020. Molmasse der Polyasparaginsäure 3000.

### Polyasparaginsäure C

Hergestellt durch thermische Kondensation von L-Asparaginsäure bei 210°C, Molmasse der Polyasparaginsäure 6000.

Man stellte weitere Waschmittelformulierungen her, indem man die in Tabelle 2 beschriebenen Waschmittelformulierungen C, D, F und I dadurch modifizierte, daß man den Cobuilder 1 durch die in Tabelle 3 beschriebenen Cobuilder ersetzte bzw. Formulierungen herstellte, die zum Vergleich keinen Cobuilder enthielten. Die Zusammensetzung dieser Waschmittelformulierungen ist in Tabelle 2 angegeben. Tabelle 3 enthält die Ergebnisse, die bei der Prüfung der inkrustationsinhibierenden Wirkung erzielt wurden. Die in der Tabelle beschriebenen Waschmittelformulierungen wurden dabei jeweils zum Waschen von Testgewebe aus Baumwolle verwendet. Die Zahl der Waschzyklen betrug 15. Nach dieser Anzahl von Wäschen wurde der Aschegehalt des Gewebes ermittelt, indem man das Testgewebe jeweils veraschte.

### Waschbedingungen

| | |
|---|---|
| Gerät | Launder-o-meter der Fa. Atlas, Chicago |
| Zahl der Waschzyklen | 15 |
| Waschflotte | 250 ml Flotte |
| Waschdauer | 30 min bei 60°C |
| Waschmitteldosierung | 4,5 g/l |
| Wasserhärte | 22,4° dH (4 mmol Ca/l; Ca:Mg = 4:1) |
| Prüfgewebe | 20 g Baumwolle-Nesselgewebe |

**Tabelle 3**

| Inkrustationsinhibierung verschiedener Cobuilder | | | | | |
|---|---|---|---|---|---|
| Beispiel | Vergleichsbeispiel | Cobuilder | Waschmittelformulierung gemäß Tabelle 2 | Gehalt an Cobuilder in Waschmittelformulierung [%] | Asche [%] |
| 1 | - | 1 | C | 5 | 1,15 |
| 2 | - | 2 | C | 5 | 1,78 |
| - | 1 | 3 | C | 5 | 2,25 |
| - | 2 | 4 | C | 5 | 2,54 |
| - | 3 | ohne | C | 0 | 4,77 |
| - | 4 | Polyasparaginsäure A | C | 5 | 3,43 |
| - | 5 | Polyasparaginsäure B | C | 5 | 4,46 |
| - | 6 | Polyasparaginsäure C | C | 5 | 3,24 |
| 3 | - | 1 | J | 5 | 2,49 |
| 4 | - | 2 | J | 5 | 2,07 |
| - | 7 | ohne | J | 0 | 4,2 |
| 5 | - | 2 | D | 5 | 1,89 |
| - | 8 | Polyasparaginsäure A | D | 5 | 2,85 |
| - | 9 | ohne | D | 0 | 5,14 |
| 6 | - | 2 | F | 5 | 1,6 |
| - | 10 | Polyasparaginsäure A | F | 5 | 2,95 |
| - | 11 | Polyasparaginsäure B | F | 5 | 4,38 |
| - | 12 | ohne | F | 0 | 4,35 |

## Patentansprüche

1. Verwendung von modifizierten Polyasparaginsäuren, die durch Polykondensation von Asparaginsäure in Gegenwart von, jeweils bezogen auf die eingesetzte Asparaginsäure,
(a) 2,5 bis 25 Mol% Aminen mit mindestens 6 C-Atomen und
(b) mindestens 2 Gew.-% Phosphorsäure, phosphoriger Säure, unterphosphoriger Säure, Polyphosphorsäuren, Phosphorpentoxid, Phosphonsäuren oder Mischungen der genannten Säuren
bei Temperaturen von mindestens 120°C und anschließende Hydrolyse mit Basen zu modifizierten Polyasparaginsäuren mit einem Phosphorgehalt von 0,5 bis 10 Gew.-% erhältlich sind, als Zusatz zu Waschmitteln, in einer Menge von 0,1 bis 20 Gew.-%, bezogen auf die Waschmittelformulierungen.

2. Verwendung nach Anspruch 1, dadurch gekennzeichnet, daß man als
(a) primäre und/oder sekundäre C₈- bis C₂₂-Alkylamine und
(b) Phosphorsäure, phosphorige Säure, Polyphosphorsäure oder deren Mischungen
einsetzt.

3. Verwendung nach Anspruch 1, dadurch gekennzeichnet, daß man als
(a) Dodecylamin, Tridecylamin, Cetylamin, Stearylamin, Palmitylamin, Oleylamin, Talgfettamin, Kokosfettamin, hydriertes Talgfettamin oder Mischungen dieser Amine und
(b) Phosphorsäure und/oder phosphorige Säure
einsetzt.

4. Verwendung nach Anspruch 1, dadurch gekennzeichnet, daß der Phosphorgehalt der modifizierten Polyasparaginsäuren 0,6 bis 5 Gew.-% beträgt.

5. Waschmittel, die mindestens ein Tensid und einen organischen Cobuilder und gegebenenfalls sonstige übliche Bestandteile enthalten, dadurch gekennzeichnet, daß sie als organischen Cobuilder 0,1 bis 20 Gew.-% einer modifizierten Polyasparaginsäure enthalten, die durch Polykondensation von Asparaginsäure in Gegenwart von, jeweils bezogen auf die eingesetzte Asparaginsäure,
(a) 2,5 bis 25 Mol% Aminen mit mindestens 6 C-Atomen und
(b) mindestens 2 Gew.-% Phosphorsäure, phosphoriger Säure, unterphosphoriger Säure, Polyphosphorsäuren, Phosphorpentoxid, Phosphonsäuren oder Mischungen der genannten Säuren
bei Temperaturen von mindestens 120°C und anschließende Hydrolyse mit Basen zu modifizierten Polyasparaginsäuren mit einem Phosphorgehalt von 0,5 bis 10 Gew.-% erhältlich sind.

## Claims

1. The use of modified polyaspartic acids which are obtainable by polycondensation of aspartic acid in the presence of, in each case based on the aspartic acid employed,
(a) 2.5 to 25 mol% of amines with at least 6 carbon atoms and
(b) at least 2 % by weight of phosphoric acid, phosphorous acid, hypophosphorous acid, polyphosphoric acids, phosphorus pentoxide, phosphonic acids or mixtures of said acids,
at temperatures of at least 120°C and subsequent hydrolysis with bases to give modified polyaspartic acids with a phosphorus content of from 0.5 to 10 % by weight, as additive to detergents in an amount of from 0.1 to 20 % by weight based on the detergent formulations.

2. The use as claimed in claim 1, employing as
(a) primary and/or secondary C₈-C₂₂-alkylamines and
(b) phosphoric acid, phosphorous acid, polyphosphoric acid or mixtures thereof.

3. The use as claimed in claim 1, employing as
(a) dodecylamine, tridecylamine, cetylamine, stearylamine, palmitylamine, oleylamine, tallow fatty amine, coconut fatty amine, hydrogenated tallow fatty amine or mixtures of these amines and
(b) phosphoric acid and/or phosphorous acid.

4. The use as claimed in claim 1, wherein the phosphorus content of the modified polyaspartic acids is 0.6 to 5 % by weight.

5. A detergent comprising at least one surfactant and an organic cobuilder and, where appropriate, other conventional ingredients, which comprises as organic cobuilder 0.1 to 20 % by weight of a modified polyaspartic acid obtainable by polycondensation of aspartic acid in the presence of, in each case based on the aspartic acid employed,
(a) 2.5 to 25 mol% of amines with at least 6 carbon atoms and
(b) at least 2 % by weight of phosphoric acid, phosphorous acid, hypophosphorous acid, polyphosphoric acids, phosphorus pentoxide, phosphonic acids or mixtures of said acids,
at temperatures of at least 120°C and subsequent hydrolysis with bases to give modified polyaspartic acids with a phosphorus content of from 0.5 to 10 % by weight.

## Revendications

1. Utilisation des poly(acide aspartique) modifiés, que l'on obtient par polycondensation de l'acide aspartique en présence de,
(a) 2,5 à 25% en moles d'amines ayant au moins 6 atomes de C et
(b) au moins 2% en poids d'acide phosphorique, d'acide phosphoreux, d'acide hypophosphoreux, d'acides polyphosphoriques, de pentoxyde de phosphore, d'acides phosphoniques ou de mélanges des acides cités, à chaque fois par rapport à l'acide aspartique mis en oeuvre,
à des températures d'au moins 120°C, suivie par une hydrolyse avec des bases en obtenant des poly(acide aspartique) modifiés ayant une teneur en phosphore de 0,5 à 10% en poids, en tant qu'additif à des agents lavants, en une quantité de 0,1 à 20% en poids, par rapport aux formulations d'agents lavants.

2. Utilisation selon la revendication 1, caractérisée en ce que l'on met en oeuvre en tant que
(a), des alkylamines en C₈ à C₂₂ primaires et/ou secondaires et en tant que
(b), l'acide phosphorique, l'acide phosphoreux, le poly(acide phosphorique) ou leurs mélanges.

3. Utilisation selon la revendication 1, caractérisée en ce que l'on met en oeuvre en tant que
(a), la dodécylamine, la tridécylamine, la cétylamine, la stéarylamine, la palmitylamine, l'oléylamine, l'amine d'huile de suif, l'amine d'huile de coprah, l'amine d'huile de suif hydrogénée ou des mélanges de ces amines et en tant que
(b), l'acide phosphorique et/ou l'acide phosphoreux.

4. Utilisation selon la revendication 1, caractérisée en ce que la teneur en phosphore des poly(acide aspartique) modifiés est de 0,6 à 5% en poids.

5. Agents lavants qui contiennent au moins un tensioactif et un co-adjuvant organique et éventuellement d'autres composants habituels, caractérisés en ce qu'ils contiennent en tant que co-adjuvant organique, 0,1 à 20% en poids d'un poly(acide aspartique) modifié que l'on peut obtenir par polycondensation de l'acide aspartique en présence de
(a) 2,5 à 25% en moles d'amines ayant au moins 6 atomes de C et
(b) au moins 2% en poids d'acide phosphorique, d'acide phosphoreux, d'acide hypophosphoreux, de poly(acide phosphorique)s, de pentoxyde de phosphore, d'acides phosphoniques ou de mélanges des acides cités, à chaque fois par rapport à l'acide aspartique mis en oeuvre,
à des températures d'au moins 120°C suivie par une hydrolyse avec des bases en obtenant des poly(acide aspartique) modifiés ayant une teneur en phosphore de 0,5 à 10% en poids.
